# EUROPÄISCHE PATENTSCHRIFT

(11) **EP 1 130 156 B1**
(45) Veröffentlichungstag und Bekanntmachung des Hinweises auf die Patenterteilung: **24.05.2006**
(21) Anmeldenummer: 00127144.4
(22) Anmeldetag: 12.12.2000
(51) Int. Cl.: D21D 5/02

(54) **Vorrichtung zum Abtrennen von Störstoffen aus faserhaltigem Gut**
Device for separating impurities from fibrous material
Appareil pour la séparation d'impuretés d'une matiere fibreuse

(30) Priorität: 04.03.2000 DE 10010751
(43) Veröffentlichungstag der Anmeldung: 05.09.2001
(73) Patentinhaber: Verwaltungs Lohse GmbH & Co. KG, D-89522 Heidenheim-Oggenhausen (DE)
(72) Erfinder: Warnke, Klaus, 89522 Heidenheim (DE)
(74) Vertreter: Dr. Weitzel & Partner

(56) Entgegenhaltungen:
- EP-A- 0 036 328
- DE-A- 3 238 742
- DE-C- 579 606
- US-A- 3 034 650

## Beschreibung

Die Erfindung betrifft das Aufbereiten von faserhaltigem Gut, insbesondere das Abtrennen von Störstoffen. Als Gut kommen dabei Biostoffe in Betracht, aber auch Stoffe wie beispielsweise Altpapier. Die Störstoffe sind beispielsweise Sand, Glas, Knochenreste, unlösbare Faserzusammenballungen und anderes mehr.

Bekannte Aufbereitungsanlagen umfassen einen Stofflöser oder Pulper, in dem das Gut durch Zugabe von Wasser mittels eines Rotors in eine pumpfähige Suspension überführt wird. An den Pulper ist eine Trenneinrichtung angeschlossen. Als Trenneinrichtung kommen Siebtrommeln, Wuchtschüttler, Vibrationstrommeln und andere Einrichtungen in Betracht.

Die bekannten Trenneinrichtungen sind offene Systeme. Sie haben den Nachteil, dass die zu verarbeitende Roh-Suspensionsmenge nur kontinuierlich eingetragen werden kann, und zwar je nach Größe der Anlage in einer bestimmten Menge. Der Inhalt des Pulpers wird nach einer gewissen Zeit entleert, der Trenneinrichtung zugeführt und darin verarbeitet. Die Störstoffe müssen vor dem Verlassen der Anlage noch eine Waschprozedur mittels einer Spritzeinrichtung unterzogen werden, um noch anhaftende brauchbare faserige und organische Bestandteile abzuwaschen. Dies bedeutet, dass die abgesiebten Störstoffe in tropfnassem Zustand ausgetragen werden müssen. Dies bedingt wiederum eine nachgeschaltete Entwässerungseinrichtung. Sedimente wie Sand, Glas und Knochenreste werden nur unzureichend oder gar nicht erfasst und dem gemäß auch nicht separat ausgetragen.

Die DE-C-576 606, EP-A-0 036 328 und US-A- 3 034 650 offenbaren eine Vorrichtung gemäß dem Oberbegriff des Anspruchs 1.

Der Erfindung liegt die Aufgabe zugrunde, eine Trenneinrichtung der genannten Art derart zu gestalten, dass die gesamte Aufbereitung wirtschaftlich und optimal abläuft, verglichen mit bekannten Einrichtungen.

Dabei soll die Trenneinrichtung in der Lage sein, den gesamten Inhalt eines vorgeschalteten Auflöseorgans in einem Zuge zu verarbeiten. Die Zeitspanne für das Entleeren des Gutes aus der Trenneinrichtung soll so gering wie möglich sein, um eine sofortige Verarbeitung einer weiteren Charge aus dem vorgeschalteten Auflöseorgan zu ermöglichen. Eine nachgeschaltete Entwässerungseinrichtung soll überflüssig gemacht werden.

Diese Aufgabe wird durch die Merkmale von Anspruch 1 gelöst.

Die erfindungsgemäße Trenneinrichtung ist dazu bestimmt, einem Auflöseorgan nachgeschaltet zu werden. Die Trenneinrichtung weist einen Hohlkörper auf, der einen Siebmantel sowie je eine stirnseitige Wand aufweist. Die stirnseitigen Wände weisen einen Zulauf für das vom Auflöseorgan kommende Gut auf, ferner einen Auslauf für das in der Trenneinrichtung behandelte, von Gutstoffen befreite Gut.

Innerhalb des Siebmantels ist ein Rotor angeordnet. Der Rotor verläuft im allgemeinen koaxial zum Zylindermantel. Er ist mit einem Antrieb ausgestattet.

Der Rotor weist eine Rotorwelle sowie eine Mehrzahl von Rotorflügeln auf. Die Flügel sind in einer besonderen Weise gestaltet: Jeder Flügel ist über seine Länge in wenigstens zwei Abschnitte unterteilt. Beide Abschnitte fördern das Gut parallel zur Rotorachse. Dabei ist jedoch der eine Abschnitt derart gestaltet und angeordnet, dass das Gut in der einen Richtung gefördert wird, während der andere Abschnitt derart gestaltet und angeordnet ist, dass er das Gut in Gegenrichtung fördert. Hierdurch werden innerhalb des Hohlkörpers - je nach Anzahl der unterschiedlichen Längenabschnitte der Rotorflügel - entgegengerichtete Strömungen erzeugt. Die eine dieser beiden Strömungen verläuft radial weiter innen, und die andere radial weiter außen. Irgendwo gibt es eine Grenzschicht, an der keine Strömung stattfindet. Diese führen zu einem intensiven Bearbeiten des Gutes.

Weitere wichtige Merkmale ergeben sich aus den Figuren, der zugehörenden Beschreibung sowie den Patentansprüchen.

Die Figuren zeigen im einzelnen folgendes:
- Figur 1: zeigt eine Trenneinrichtung in einem Axialschnitt.
- Figur 2: zeigt die Trenneinrichtung gemäß Figur 1 in einem achssenkrechten Schnitt.

Die Trenneinrichtung umfasst einen Siebkorb 1 mit einem zylindrischen Mantel 1.1 und zwei Stirnwänden 1.2, 1.3. Der Siebkorb 1 umschließt einen Rotor 2. Der Rotor umfasst eine Rotorwelle 2.1 sowie eine Anzahl von Rotorflügeln 2.2. Auf diese soll noch weiter unten eingegangen werden.

Der zylindrische Mantel 1.1 ist seinerseits von einem Mantel 3 umschlossen. Siebmantel 1.1 und Mantel 3 schließen einen im wesentlichen zylindrischen Ringraum 4 zwischen sich ein. Der äußere Mantel 3 bildet zusammen mit den Stirnwänden 1.2, 1.3 ein Gehäuse.

Die Stirnwand 1.3 weist einen Einlass 1.3.1 für den Eintritt von Gut auf, das aus einem hier nicht dargestellten Stofflöser kommt. Die Stirnwand 1.2 weist einen Auslass 1.2.1 auf. Dieses ist für Restgut bestimmt, das in der Trennvorrichtung behandelt wurde, und von dem brauchbare Fasern abgetrennt wurden.

Die Rotorflügel sind gemäß der Erfindung in einer ganz besonderen Weise gestaltet und angeordnet. Jeder Rotorflügel 2.2 weist zwei Längenabschnitte auf, und zwar einen radial äußeren Abschnitt 2.2.1 und einen radial inneren Abschnitt 2.2.2. Beide Abschnitte üben auf das in der Trennvorrichtung befindliche Gut eine Förderwirkung aus, und zwar parallel zur Achse der Rotorwelle 2.1, jedoch in entgegengesetzten Richtungen. Bei einer bestimmten Drehrichtung der Rotorwelle, erzeugt durch einen Antriebsmotor 5, verläuft die von den äußeren Flügelabschnitten 2.2.1 erzeugte Förderwirkung in Richtung des Pfeiles A, und die von den inneren Flügelabschnitten 2.2.2 erzeugte Förderung in Richtung des Pfeiles B. Das Gut wird somit innerhalb des Siebkorbes 1 in verschiedenen Richtungen bewegt. An den Grenzflächen treten Scherwirkungen auf. Dies fördert die Abscheidung von Wertstoffen. Im vorliegenden Falle, d. h. bei der hier dargestellten Strömungsrichtung des Gutes gemäß den Pfeilen A und B muß der Motor 5 - in Draufsicht auf dessen freies Ende gesehen - im Uhrzeigersinn umlaufen.

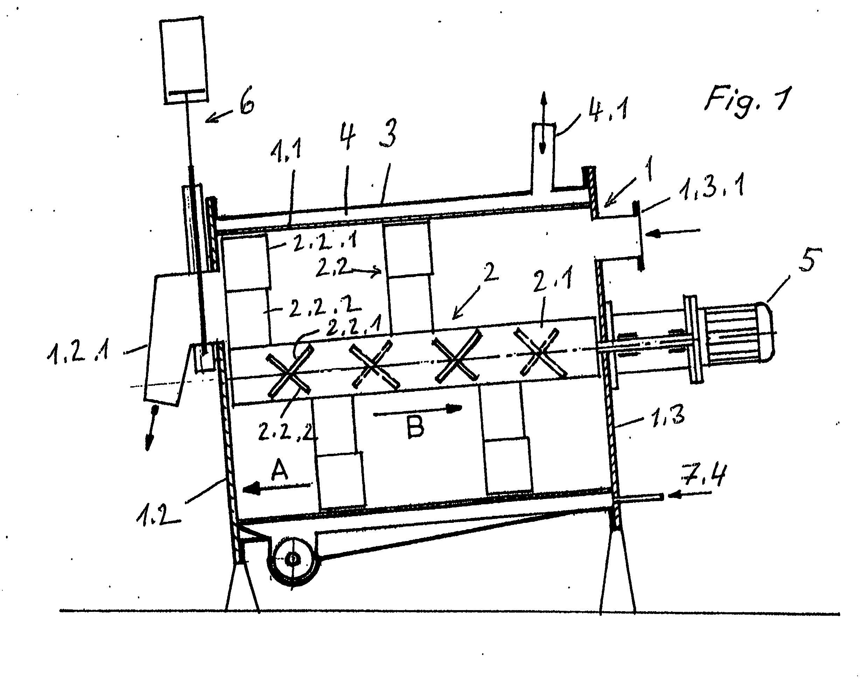

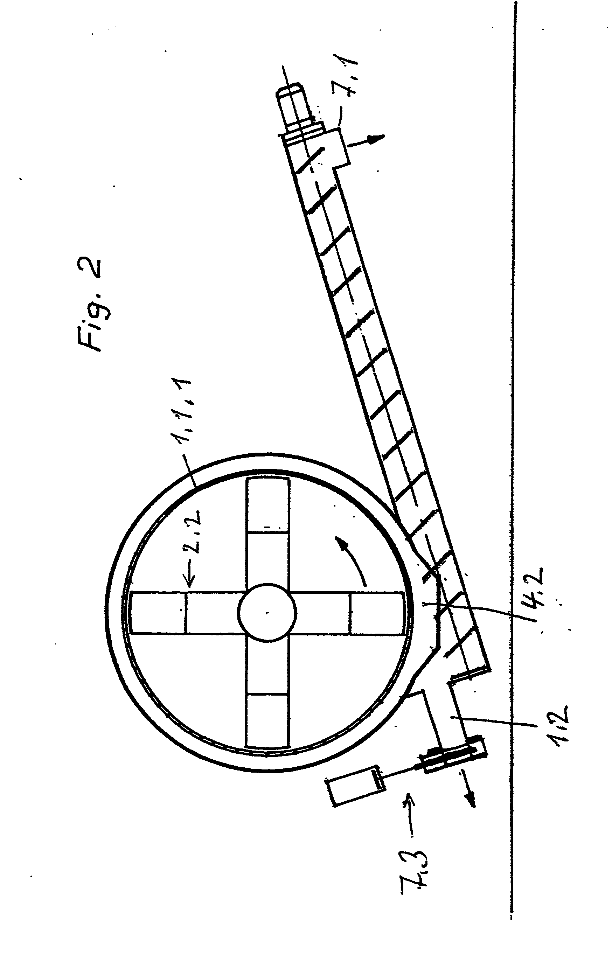

Man erkennt weiterhin die folgenden Elemente: Dem Auslauf 1.2.1 ist ein Auswurfschieber 6 zugeordnet. Am Ringraum 4 ist ein Anschluss 4.1 angeordnet, der zur Be- und Entlüftung des Systems dient. Der Ringraum 4 bildet in seinem unteren Bereich einen Sedimentkanal 4.2 - siehe Figur 2. Dem Sedimentkanal 4.2 ist ein Sediment-Wendelförderer 7 nachgeschaltet. Dieser weist einen Sedimentauswurf 7.1 an seinem oberen Ende auf, und einen Gutstoffablauf 7.2 an seinem unteren Ende. Dem Gutstoffablauf 7.2 ist ein Gutstoffschieber 7.3 zugeordnet. Wie man aus Figur 1 erkennt, hat der Sediment-Wendelförderer 7 einen Spülwasserzulauf 7.4.

Eine wichtige Einzelheit besteht noch darin, dass der Siebkorb 1.1 nicht auf seinem gesamten Umfang aus Siebmaterial hergestellt ist. Vielmehr ist er auf einem Teil seines Umfanges aus einem nicht-durchlässigen Blech 1.1.1 gebildet - siehe Figur 2.

Die Trennvorrichtung arbeitet wie folgt:
Über den Zulauf 1.3.1 gelangt das zu behandelnde Gut in Gestalt einer Rohsuspension in den vom Siebkorb 3 umschlossenen Innenraum der Vorrichtung. Die Rohsuspension wurde von einem Stofflöser hergestellt.

Durch den Umlauf des Rotors 2 mit seinen Flügeln 2.2 tritt die Rohsuspension durch die Löcher oder Schlitze des Siebkorbes 1.1 in den Ringraum 4 ein. Die Gutsuspension fließt sodann am Sediment-Wendelförderer 7 vorbei zum geöffneten Gutstoff-Schieber 7.3. Der Gutstoff enthält, wie oben ausgeführt, Wertstoffe wie Faserstoffe, die von der Gesamtsuspension abgetrennt sind. Im Inneren der Vorrichtung verbleiben somit immer mehr Störstoffe. Solange die Störstoffe noch von Flüssigkeit durchsetzt sind, findet eine Zirkulation dieser Masse innerhalb des Siebkorbes 1.1 statt. Die Zirkulation ist dabei gegenläufig, so wie oben geschildert.

Ist die Gutsuspension aus dem Siebgut gänzlich abgelaufen, so erfolgt der Transport der Störstoffmasse in Richtung des Pfeiles A. Die Störstoffmasse wird gegen den Gehäusedeckel 2 gepresst und gänzlich entwässert. Der von Schlitzen oder Löchern freie Umfangsabschnitt 1.1.1 des Siebkorbes 1 verhindert, dass beim Auspressen der Störstoffmasse Störstoffanteile durch den Siebkorb 1.1 hindurchgedrückt werden. Der genannte Umfangsabschnitt 1.1.1 erstreckt sich über einen Winkel von etwa 60 Grad. Abweichungen nach oben oder nach unten sind möglich.

Da sich in den Störstoffen aber immer noch brauchbare Stoffe organischer oder faseriger Natur befinden, müssen diese ausgewaschen werden. Dazu wird Schieber 7.3 geschlossen. Der Antrieb 5 wird derart gesteuert, dass er den Rotor in entgegengesetzter Richtung umlaufen lässt. Über den Spülwasserzulauf 7.4 wird eine bestimmte Menge Waschwasser eingeleitet. Durch die genannte Umkehr der Rotor-Drehrichtung wird die zusammengepresste Störstoffmasse wieder aufgelockert, in Richtung des Pfeiles B transportiert und mit dem Spülwasser gut vermischt und ausgewaschen.

Nunmehr wird der Drehsinn des Rotorumlaufes wiederum umgekehrt, und Schieber 7.3 wird geöffnet. Das Waschwasser fließt ab, und die Störstoffmasse wird erneut in Richtung des Pfeiles A gefördert und ausgepresst. Nunmehr wird Schieber 6 am Auslass 1.2.1 geöffnet, so dass die Störstoffmasse durch den Auslass 1.2.1 ausgetragen wird.

Das Sediment, das sich im Sedimentkanal 4.2 abgelagert hat, wurde bereits beim Spülwasserzulauf in den Wendelförderer 7 gespült und wird nunmehr als letzte Phase des gesamten Prozesses mittels des Wendelförderers 7 zum Sedimentauswurf 7.1 transportiert.

Sodann wird der Schieber 6 am Auslass 1.2.1 wieder geschlossen, so dass der nächste Verarbeitungszyklus beginnen kann.

Wie man aus Figur 1 erkennt, ist die Längsachse der Rotorwelle 2 gegen die Horizontale geneigt, desgleichen die Achse des Siebkorbes 1 sowie des äußeren Mantels 3.

Die erfindungsgemäße Vorrichtung führt eine Reihe von Funktionen gleichzeitig aus. Diese sind
- Sieben
- Waschen
- Auspressen
- Abführen von Sediment.

## Patentansprüche

1. Vorrichtung zum Abtrennen von Störstoffen aus Gut, insbesondere aus Biomasse oder aus faserhaltigem Gut;
1.1 mit einem Siebkorb (1), umfassend einen rotationssymmetrischen Siebmantel (1.1) sowie je eine stirnseitige Wand (1.2, 1.3), deren eine einen Zulauf (1.3.1) und deren andere einen Auslauf (1.2.1) hat; und
1.2 mit einem Rotor (2), der vom Siebmantel (1.1) umschlossen ist und eine Rotorwelle (2.1) sowie mehrere Rotorflügel (2.2) aufweist;
1.3 wobei der Rotorwelle (2) ein Antrieb (5) zugeordnet ist;
1.4 **dadurch gekennzeichnet, dass** wenigstens einige der Rotorflügel (2.2) wenigstens zwei radiale Längenabschnitte (2.2.1, 2.2.2) aufweisen, nämlich einen radial inneren (2.2.2) und einen radial äußeren (2.2.1) Längenabschnitt, die derart gestaltet und angeordnet sind, dass sie auf das Gut achsparallele, jedoch entgegengerichtete Förderkräfte ausüben ; und
1.5 dass der Siebmantel (1.1) einen von Durchbrechungen freien Umfangsbereich (1.1.1) aufweist.

2. Vorrichtung nach Anspruch 1, **dadurch gekennzeichnet, dass** der Siebkorb (1) von einem Mantel (3) umgeben ist, der zusammen mit dem Siebmantel (1.1) einen Ringspalt (4) bildet.

3. Vorrichtung nach Anspruch 1 oder 2, **dadurch gekennzeichnet, dass** der Antrieb (5) reversierbar ist.

4. Vorrichtung nach einem der Ansprüche 1 bis 3, **dadurch gekennzeichnet, dass** die Achse der Rotorwelle (2.1) gegen die Horizontale geneigt ist.

5. Vorrichtung nach einem der Ansprüche 2 bis 4, **dadurch gekennzeichnet, dass** der Ringspalt (4) in seinem unteren Bereich einen Sedimentkanal aufweist.

6. Vorrichtung nach Anspruch 5, **dadurch gekennzeichnet, dass** dem Sedimentkanal (4.2) ein Sediment-Wendelförderer (7) nachgeschaltet ist.

## Claims

1. An apparatus for separating interfering material from a stock, especially made of biomass or fibrous material;
1.1 with a screening basket (1), comprising a rotationally symmetrical screening jacket (1.1) and a face-side wall (1.2, 1.3) each, one of which comprises an inlet (1.3.1) and the other an outlet (1.2.1), and
1.2 with a rotor (2) which is enclosed by the screening jacket (1.1) and comprises a rotor shaft (2.1) and several rotor blades (2.2);
1.3 with the rotor shaft (2) being associated with a drive (5);
1.4 **characterized in that** at least some of the rotor blades (2.2) comprise at least two radial longitudinal sections (2.2.1, 2.2.2), namely a radial inside (2.2.2) and a radial outside (2.2.1) longitudinal section, which are configured and arranged in such a way that they exert on the stock axially parallel conveying forces directed in opposite directions, and
1.5 that the screening jacket (1.1) comprises a circumferential region (1.1.1) which is free from breakthroughs.

2. An apparatus according to claim 1, **characterized in that** the screening basket (1) is enclosed by a jacket (3) which forms an annular gap (4) with the screening jacket (1.1).

3. An apparatus according to claim 1 or 2, **characterized in that** the drive (5) is reversible.

4. An apparatus according to one of the claims 1 to 3, **characterized in that** the axis of the rotor shaft (2.1) is inclined against the horizontal.

5. An apparatus according to one of the claims 2 to 4, **characterized in that** the annular gap (4) comprises a sediment channel in its lower region.

6. An apparatus according to claim 5, **characterized in that** a sediment spiral conveyor (7) is provided downstream of the sediment channel (4.2).

## Revendications

1. Dispositif pour séparer des particules indésirables d'une matière, en particulier de biomasse ou d'une matière contenant des fibres,
1.1 avec un tamis (1) comprenant une enveloppe perforée (1.1) symétrique en rotation et des parois frontales (1.2, 1.3) dont l'une possède une arrivée (1.3.1) et l'autre une sortie (1.2.1) ; et
1.2 avec un rotor (2) entouré par l'enveloppe perforée (1.1) et qui possède un arbre de rotor (2.1) et plusieurs pales de rotor (2.2) ;
1.3 dans lequel l'arbre de rotor (2.1) est associé à un entraînement (5) ;
1.4 **caractérisé en ce que** quelques-unes au moins des pales de rotor (2.2) possèdent au moins deux segments de longueur radiaux (2.2.1, 2.2.2), à savoir un segment de longueur intérieur dans le sens radial (2.2.2) et un segment de longueur extérieur dans le sens radial (2.2.1), qui sont conformés et disposés de telle sorte qu'ils exercent sur la matière des forces d'avancement parallèles mais de sens opposé ; et
1.5 **en ce que** l'enveloppe perforée (1.1) possède une zone de circonférence (1.1.1) sans ouvertures.

2. Dispositif selon la revendication 1, **caractérisé en ce que** le tamis (1) est entouré par une enveloppe (3) qui forme un interstice annulaire (4) avec l'enveloppe perforée (1.1).

3. Dispositif selon la revendication 1 ou 2, **caractérisé en ce que** l'entraînement (5) est à sens de rotation inversable.

4. Dispositif selon l'une quelconque des revendications 1 à 3, **caractérisé en ce que** l'axe de l'arbre de rotor (2.1) est incliné par rapport à l'horizontale.

5. Dispositif selon l'une quelconque des revendications 2 à 4, **caractérisé en ce que** l'interstice annulaire (4) possède un canal à sédiments dans sa partie inférieure.

6. Dispositif selon la revendication 5, **caractérisé en ce que** le canal à sédiments (4.2) est suivi d'un convoyeur de sédiments hélicoïdal (7).
